# DEMANDE DE BREVET EUROPEEN

(11) **EP 0 753 697 A1**
(43) Date de publication de la demande: **15.01.1997**
(21) Numéro de dépôt: 96401406.2
(22) Date de dépôt: 25.06.1996
(51) Int. Cl.: F16L 37/088, F16L 37/56

(54) **Dispositif de raccord rapide entre une tubulure et un embout, notamment pour échangeur de chaleur, et échangeur de chaleur équipé d'un tel dispositif**

(30) Priorité: 28.06.1995 FR 9507784
(71) Demandeur: VALEO CLIMATISATION, 78321 La Verrière (FR)
(72) Inventeur: Martins, Carlos, 78490 Montfort (FR); Wurmser, Martin, 72000 Le Mans (FR)
(74) Mandataire: Gamonal, Didier

(57) **Abrégé**

L'invention concerne un dispositif de raccord rapide pour le raccordement d'une tubulure à gorge annulaire et d'un embout.

Le dispositif comprend une bague (26) propre à être enfilée autour d'une tubulure (10) et munie d'un moyen de verrouil- lage (40) propre à s'engager dans une gorge annulaire (20) de la tubulure pour immobiliser la bague par rapport à la tubulure, l'embout (12) comprenant un logement (60) aménagé pour recevoir l'extrémité de la tubulure ainsi que la bague avec interposition d'un moyen d'étanchéité (68) entre l'embout et la tubulure, cet embout étant muni d'un moyen de verrouillage (74) propre à immobiliser l'embout par rapport à la bague.

Application notamment au raccordement des tubulures d'entrée et de sortie de fluide caloporteur d'un échangeur de chaleur.

## Description

L'invention concerne un dispositif de raccord rapide pour le raccordement d'une tubulure et d'un embout, en particulier pour un échangeur de chaleur, ainsi qu'un échangeur de chaleur équipé d'un tel dispositif.

Elle concerne plus particulièrement un dispositif pour le raccordement d'une tubulure à gorge annulaire et d'un embout, cet embout pouvant être formé à l'extrémité d'un conduit, par exemple un conduit souple, ou recevoir un tel conduit par emmanchement.

Un tel dispositif de raccordement peut servir notamment à faire partie d'un circuit de refroidissement du moteur, ou de chauffage de l'habitacle, d'un véhicule automobile. En pareil cas, un tel dispositif est généralement jumelé pour permettre le raccordement des tubulures d'un échangeur de chaleur, qui servent à l'entrée et à la sortie d'un fluide caloporteur, et de deux embouts correspondants qui sont habituellement reliés à des conduits souples propres à transporter le fluide caloporteur entre l'échangeur de chaleur et d'autres éléments du circuit de fluide.

On connaît déjà, notamment d'après la Demande de brevet français No 93 14261, un dispositif jumelé de ce type. Toutefois, ce dispositif connu ne convient qu'à des tubulures particulières présentant une nervure annulaire extérieure.

Or, il existe aussi un besoin pour le raccordement rapide d'au moins un embout avec au moins une tubulure munie d'une gorge annulaire.

L'invention vient apporter une solution à ce problème.

Elle propose à cet effet un dispositif de raccord rapide du type défini en introduction, lequel comprend une bague qui est propre à être enfilée autour de la tubulure et qui est munie d'un premier moyen de verrouillage propre à s'engager dans la gorge annulaire de la tubulure pour immobiliser la bague par rapport à la tubulure, et dans lequel l'embout comprend un logement aménagé pour recevoir une extrémité de la tubulure ainsi que la bague, avec interposition d'un moyen d'étanchéité entre l'embout et la tubulure, l'embout étant muni d'un second moyen de verrouillage propre à immobiliser l'embout par rapport à la bague.

Ainsi, le raccordement de la tubulure et de l'embout s'effectue par l'intermédiaire d'une bague qui vient s'immobiliser par rapport à la tubulure d'une part, et par rapport à l'embout d'autre part, avec interposition d'un moyen d'étanchéité.

Dans une forme de réalisation de l'invention, la bague comprend un corps annulaire déformable interrompu par une fente, et le premier moyen de verrouillage comprend une nervure annulaire formée intérieurement sur le corps de bague et interrompue par la fente, cette nervure étant propre à s'engager dans la gorge annulaire de la tubulure par déformation du corps de bague.

Dans une autre forme de réalisation de l'invention, la bague comprend un corps annulaire continu, et le premier moyen de verrouillage comprend une broche propre à traverser le corps de bague à partir de l'extérieur pour s'engager dans la gorge annulaire de la tubulure.

Avantageusement, cette broche comprend deux branches sensiblement parallèles entre elles et propres à traverser deux passages du corps de bague pour s'engager dans deux régions diamétralement opposées de la gorge de la tubulure, ces deux branches étant réunies entre elles par une âme propre à ne pas dépasser de la périphérie extérieure de la bague.

La bague peut comprendre au moins un repère d'indexation formé à sa périphérie et propre à coopérer avec un logement correspondant de l'embout pour permettre l'immobilisation de la bague et de l'embout dans une position déterminée.

De façon avantageuse, cette bague comprend deux repères d'indexation diamétralement opposés et de configuration différente pour servir de détrompeurs.

Avantageusement, la bague possède un corps délimité extérieurement par une paroi antérieure tronconique et une paroi postérieure cylindrique, en sorte que, après immobilisation de la bague autour de la tubulure, l'extrémité de la tubulure dépasse de la bague.

En pareil cas, le logement de l'embout est défini par une première paroi cylindrique propre à loger l'extrémité de la tubulure, par une paroi tronconique propre à loger la paroi tronconique de la bague et par une seconde paroi cylindrique propre à loger la paroi cylindrique de la bague.

Avantageusement, l'embout comprend une gorge intérieure propre à loger un joint d'étanchéité torique pour coopérer avec l'extrémité de la tubulure.

Le second moyen de verrouillage est avantageusement réalisé sous la forme d'un jonc déformable propre à entourer au moins en partie l'embout et comportant deux parties opposées rappelées élastiquement l'une vers l'autre, ces deux parties opposées étant propres à traverser deux fentes opposées de l'embout pour venir s'engager dans une rainure annulaire ménagée à la périphérie de la bague.

Ce jonc déformable est de préférence réalisé à partir d'un fil métallique et il comprend une poignée.

L'embout peut comprendre une partie étagée pour la réception d'un conduit souple.

De préférence, la tubulure est métallique, par exemple en aluminium, tandis que la bague et l'embout sont en matière plastique.

Dans une forme de réalisation préférée de l'invention, le dispositif comprend deux bagues propres à assurer le raccordement simultané de deux tubulures et de deux embouts, ces bagues étant reliées entre elles par un lien souple autorisant un déplacement mutuel des deux bagues.

En pareil cas, les deux tubulures sont avantageusement des tubulures d'entrée et de sortie de fluide caloporteur d'un échangeur de chaleur.

Dans la description qui suit, faite seulement à titre d'exemple, on se réfère aux dessins annexés, sur lesquels :
- la figure 1 est une vue en perspective de deux bagues jumelées d'un dispositif selon une première forme de réalisation de l'invention, avant leur emmanchement autour de deux tubulures;
- la figure 2 montre les deux tubulures équipées des deux bagues, avant leur raccordement à deux embouts correspondants;
- la figure 3 est une vue en coupe axiale d'un embout, d'une bague et d'une tubulure avant raccordement;
- la figure 4 est une vue analogue à celle de la figure 3 après raccordement;
- la figure 5 est une vue de côté de deux bagues jumelées;
- la figure 6 est une vue d'extrémité correspondant à la figure 5;
- la figure 7 est une vue en perspective d'une bague, selon une deuxième forme de réalisation de l'invention, avant emmanchement autour d'une tubulure;
- la figure 8 est une vue analogue à celle de la figure 7 après emmanchement; et
- la figure 9 est une vue partielle de côté de la tubulure des figures 7 et 8.

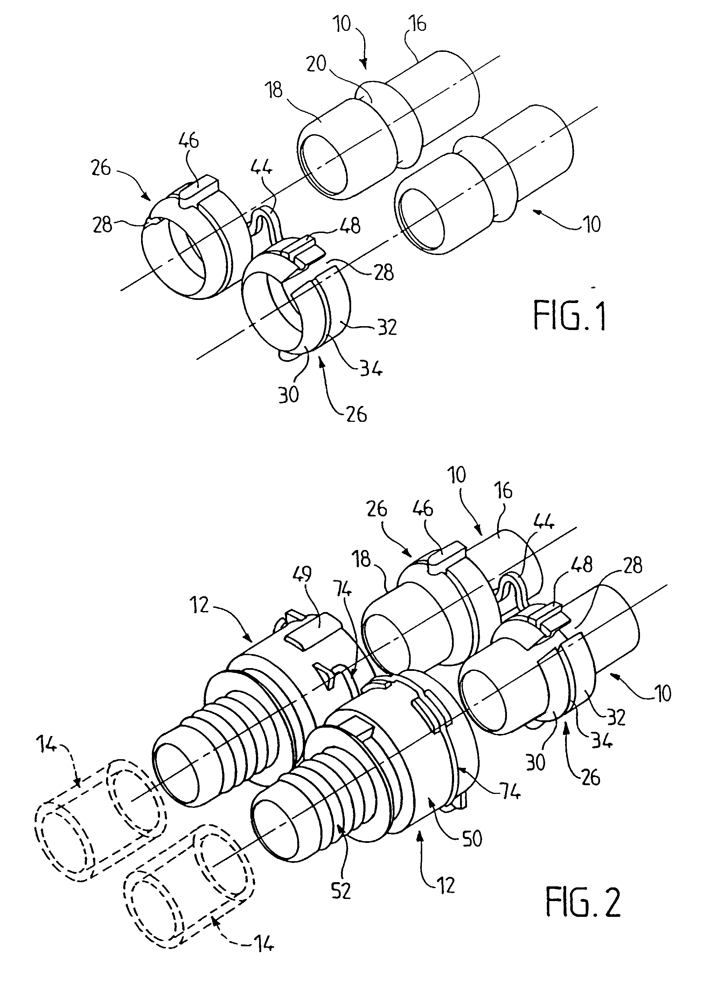

Le dispositif des figures 1 et 2 est destiné à raccorder deux tubulures 10, d'axes sensiblement parallèles, respectivement à deux embouts 12 (figure 2). Les tubulures 10, réalisées par exemple en un métal tel que de l'aluminium, constituent les tubulures d'entrée et de sortie d'un échangeur de chaleur non représenté. Cet échangeur de chaleur fait partie d'une circulation de fluide caloporteur, par exemple d'un circuit de refroidissement du moteur, ou de chauffage de l'habitacle, d'un véhicule automobile. Les embouts 12 sont propres à être reliés respectivement à deux conduits souples 14 (représentés en trait interrompu sur la figure 2) pour relier l'échangeur de chaleur à des autres éléments du circuit de circulation du fluide caloporteur.

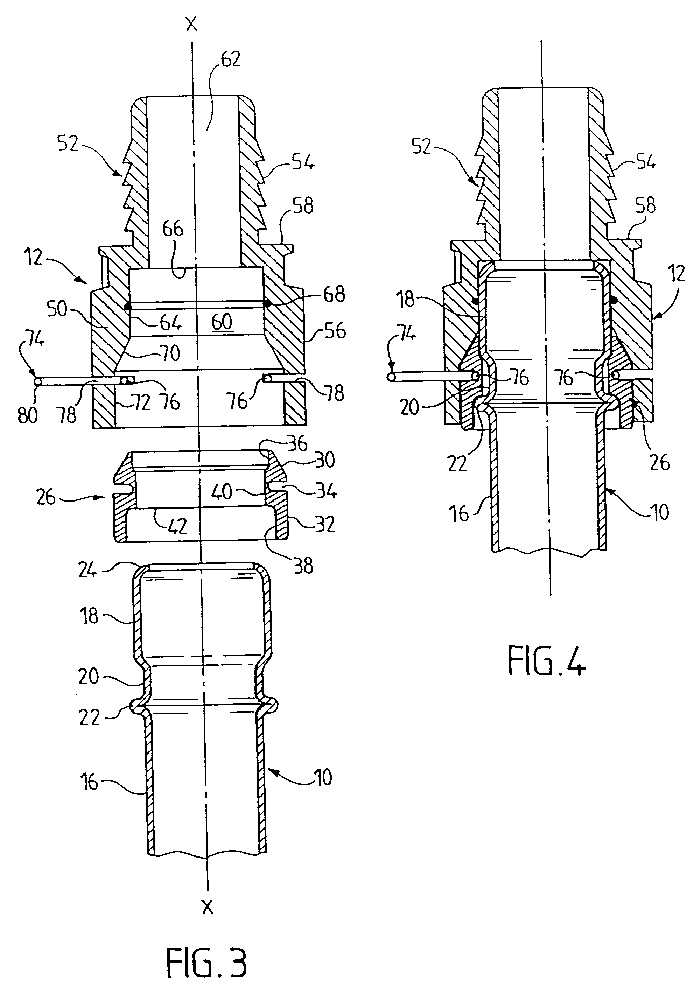

Comme on le voit mieux sur la figure 3, chaque tubulure 10 affecte une forme de révolution autour d'un axe X-X. La tubulure 10 comprend un corps 16, une extrémité libre 18 et une gorge annulaire 20 formée entre le corps 16 et l'extrémité libre 18. Entre la gorge 20 et le corps 16 est en outre formé un bourrelet 22. L'extrémité 18 se termine par un épaulement annulaire 24.

Le dispositif de raccordement comprend deux bagues jumelées 26 propres à être enfilées autour des tubulures respectives 10. Chaque bague 26 comprend un corps annulaire en matériau déformable, par exemple en matière plastique, interrompu par une fente 28 (figures 1, 2, 5 et 6), laquelle s'étend dans une direction généralement parallèle à l'axe.

Le corps de la bague 26 est délimité extérieurement par une paroi antérieure tronconique 30 et par une paroi postérieure cylindrique 32, dans laquelle est formée une gorge annulaire 34 (figures 1, 2 et 3).

Le corps de la bague est délimité intérieurement par une paroi cylindrique antérieure 36, une paroi cylindrique postérieure 38 et une paroi cylindrique intermédiaire 40, de plus faible diamètre que les parois 36 et 38 (figure 3). Le diamètre de la paroi 38 est sensiblement égal au diamètre du bourrelet 22, de manière que celui-ci puisse venir en appui contre un épaulement 42 formé entre les parois cylindriques 38 et 40 (figure 3). On comprendra que la bague 26 peut être expansée radialement puis enfilée autour de la tubulure jusqu'à ce que l'épaulement 42 vienne contre le bourrelet 22. Ensuite, la bague se contracte radialement, du fait de son élasticité propre, pour que la paroi cylindrique 40 pénètre dans la gorge 20 de la tubulure, comme on le voit sur la figure 4.

Les bagues 26 sont reliées entre elles par un lien souple 44 en forme de U autorisant un déplacement mutuel des deux bagues perpendiculairement à leurs axes respectifs.

Par ailleurs, chacune des bagues 26 comporte deux repères d'indexation 46 et 48, diamétralement opposés, et de configuration différente pour servir de détrompeurs. Ces repères sont des ergots en saillie destinés à coopérer dans des évidements correspondants des embouts 12, par exemple dans un évidement 49 (figure 2).

Chaque embout 12 est réalisé de préférence en matière plastique et comprend, comme on le voit mieux sur la figure 3, un corps 50 prolongé par une partie tubulaire 52 possédant un relief étagé 54 destiné à être coiffé par un conduit 14.

Le corps 50 est délimité extérieurement par une paroi cylindrique 56 qui se raccorde à la partie tubulaire 52 par un épaulement 58.

L'embout 12 délimite intérieurement un logement 60 aménagé pour recevoir l'extrémité 18 de la tubulure ainsi que la bague 26 préalablement enfilée sur la tubulure. Ce logement 60 communique avec un passage axial 62 de la partie tubulaire 52 (figure 3).

Le logement 60 est délimité par une paroi cylindrique 64 de diamètre sensiblement égal à celui de l'extrémité 18 de la tubulure, cette paroi cylindrique 64 étant reliée au passage 62 par un épaulement 66. Cette paroi tubulaire 64 comprend une gorge annulaire propre à recevoir un joint torique d'étanchéité 68.

Le logement 60 est en outre délimité par une paroi tronconique 70 qui se raccorde, d'une part à la paroi 64, et d'autre part à une paroi cylindrique 72 débouchant vers l'extérieur. Les parois 70 et 72 ont des formes qui s'adaptent respectivement aux parois 30 et 32 de la bague 26.

Chaque embout 12 est muni d'un organe de verrouillage 74 destiné à immobiliser l'embout par rapport à la bague après leur emboîtement mutuel.

L'organe de verrouillage 74 est un jonc déformable en fil métallique propre à entourer au moins en partie l'embout 12 et comportant deux parties opposées 76 rappelées élastiquement l'une vers l'autre (figure 3). Ces deux parties 76 sont propres à traverser deux fentes opposées 78 ménagées dans le corps 50 de l'embout 12 pour établir un passage de communication entre la paroi extérieure 56 et la paroi intérieure 72. Par ailleurs, le jonc 74 comprend une poignée 80 pour faciliter son actionnement. Les deux parties opposées 76 sont propres à s'engager dans la gorge extérieure 34 de la bague 26 pour immobiliser mutuellement la bague et l'embout.

Le dispositif des figures 1 à 6 s'utilise de la façon suivante.

Les deux bagues 26 sont présentées en vis-à-vis et dans l'axe des extrémités 18 des tubulures 10 (figure 1). Les bagues sont ensuite enfilées autour des extrémités 18, ce qui provoque leur expansion radiale, puis leur contraction, pour parvenir dans la position de la figure 2. Dans cette position, les deux bagues sont immobilisées axialement sur les tubulures et également en rotation, du fait du lien 14. Ensuite, les deux embouts 12 sont présentées en vis-à-vis et dans l'axe des tubulures 10 préalablement équipées des bagues 26, comme montré à la figure 2.

Les embouts 12 sont déplacés axialement et viennent ainsi coiffer les extrémités 18 des tubulures 10, ainsi que les bagues 26, pour arriver dans la position représentée à la figure 4. En fin de course d'introduction, l'organe de verrouillage 74 s'écarte automatiquement, puis les parties 76 se rapprochent l'une de l'autre pour venir dans la gorge 34 de la bague 26. On obtient ainsi un verrouillage de la bague, d'une part avec la tubulure, et d'autre part avec l'embout. Par ailleurs, le joint d'étanchéité 68 assure une étanchéité entre l'extrémité 18 de la tubulure et l'embout.

De cette manière, on obtient un raccordement rapide pouvant être effectué, de façon particulièrement simple et rapide, sur les chaînes de montage de véhicules automobiles.

On se réfère maintenant à la forme de réalisation des figures 7 à 9.

Dans cette forme de réalisation, la tubulure 10 comprend, là aussi, une gorge annulaire 20; toutefois, à la différence de la forme de réalisation précédente, il n'est pas prévu de bourrelet entre la gorge 20 et le corps 16 de la tubulure.

Dans cette forme de réalisation, la bague 26 comprend un corps annulaire continu, donc non fendu, et le moyen de verrouillage de la bague est ici constitué par une broche 90 réalisée sous la forme d'un fil métallique plié. Cette broche comprend deux branches 92 sensiblement parallèles entre elles (figure 7), propres à traverser le corps de bague, à partir de l'extérieur, pour s'engager dans la gorge annulaire 20 de la tubulure. Les deux branches 92 sont prévues pour traverser deux passages 94 ménagés dans l'épaisseur du corps de bague, de manière à s'engager dans deux régions diamétralement opposées de la gorge 20.

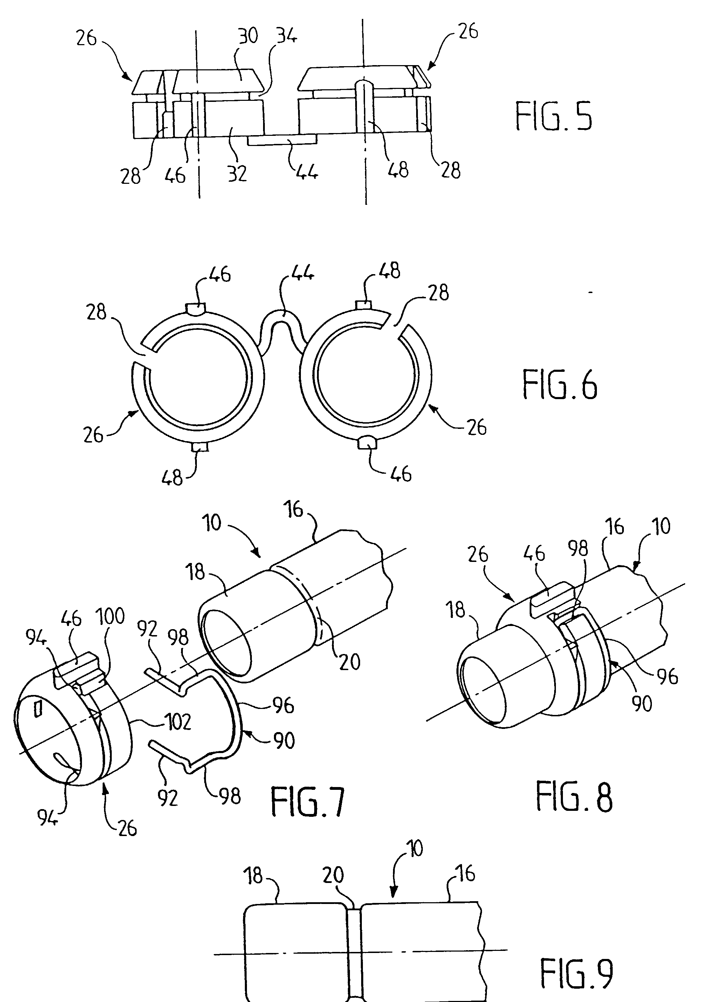

Les deux branches 92 sont réunies entre elles à une âme 96 de forme générale incurvée, par l'intermédiaire de deux segments 98 parallèles entre eux. Ces deux segments 98 sont propres à s'encastrer dans deux évidements 100 parallèles entre eux et à l'axe de la bague 26, quï sont ménagés dans la paroi postérieure cylindrique 32 du corps de bague. Ainsi, la bague 26 doit être d'abord emmanchée autour de la tubulure 10, puis la broche 90 est introduite latéralement pour que ses deux branches 92 provoquent le verrouillage. Lorsque la broche est complètement introduite (figure 8), la bague est immobilisée par rapport à la tubulure et l'âme 96 de la broche vient s'appuyer derrière une face postérieure 102 de la bague 26 (figure 7). Ainsi, lorsque la bague est complètement immobilisée, l'âme 96 et les deux segments 98 ne dépassent pas de la périphérie extérieure de la bague. Ensuite, l'extrémité de la tubulure et le corps de bague sont tous deux introduits dans le logement de l'embout 12, comme décrit précédemment. Il est à noter que lorsque l'embout 12 vient coiffer l'extrémité de la tubulure et la bague, il est impossible d'extraire la broche 90.

Dans l'une ou l'autre des formes de réalisation précédemment décrites, il est possible de procéder au démontage du dispositif de raccordement en libérant d'abord le jonc de verrouillage 74 de l'embout, de manière à permettre de séparer l'embout de la tubulure, puis d'enlever ensuite la bague, si nécessaire.

L'invention est utilisable tout particulièrement pour le raccordement d'échangeurs de chaleur de véhicules automobiles.

## Revendications

1. Dispositif de raccord rapide pour le raccordement d'une tubulure à gorge annulaire et d'un embout,
caractérisé en ce qu'il comprend une bague (26) qui est propre à être enfilée autour de la tubulure (10) et qui est munie d'un premier moyen de verrouillage (28, 40; 90) propre à s'engager dans la gorge annulaire (20) de la tubulure (10) pour immobiliser la bague par rapport à la tubulure,
et en ce que l'embout (12) comprend un logement (60) aménagé pour recevoir une extrémité (18) de la tubulure (10) ainsi que la bague (26), avec interposition d'un moyen d'étanchéité (68) entre l'embout et la tubulure, l'embout (12) étant muni d'un deuxième moyen de verrouillage (74) propre à immobiliser l'embout par rapport à la bague.

2. Dispositif selon la revendication 1, caractérisé en ce que la bague (26) comprend un corps annulaire déformable interrompu par une fente (28), et en ce que le premier moyen de verrouillage comprend une nervure annulaire (40) formée intérieurement sur le corps de bague et interrompue par la fente (28), cette nervure (40) étant propre à s'engager dans la gorge annulaire (20) de la tubulure par déformation du corps de bague.

3. Dispositif selon la revendication 1, caractérisé en ce que la bague (26) comprend un corps annulaire continu et en ce que le premier moyen de verrouillage comprend une broche (90) propre à traverser le corps de bague, à partir de l'extérieur, pour s'engager dans la gorge annulaire (20) de la tubulure (10).

4. Dispositif selon la revendication 3, caractérisé en ce que la broche (26) comprend deux branches (92) sensiblement parallèles entre elles et propres à traverser deux passages (94) du corps de bague pour s'engager dans deux régions diamétralement opposées de la gorge (20) de la tubulure (10), et en ce que ces deux branches (92) sont réunies entre elles par une âme (96) propre à ne pas dépasser de la périphérie extérieure de la bague (26).

5. Dispositif selon l'une des revendications 1 à 4, caractérisé en ce que la bague (26) comprend au moins un repère d'indexation (46, 48) formé à sa périphérie et propre à coopérer avec un évidement correspondant (49) de l'embout (12) pour permettre l'immobilisation en rotation de la bague et de l'embout dans une position déterminée.

6. Dispositif selon la revendication 5, caractérisé en ce que la bague (26) comprend deux repères d'indexation (46, 48) diamétralement opposés et de configuration différente pour servir de détrompeurs.

7. Dispositif selon l'une des revendications 1 à 6, caractérisé en ce que la bague (26) possède un corps délimité extérieurement par une paroi antérieure tronconique (30) et une paroi postérieure cylindrique (32), en sorte que, après immobilisation de la bague (26) autour de la tubulure (10), l'extrémité (18) de la tubulure dépasse de la bague.

8. Dispositif selon la revendication 7, caractérisé en ce que le logement (60) de l'embout (12) est défini par une première paroi cylindrique (64) propre à loger l'extrémité (18) de la tubulure, une paroi tronconique (70) propre à loger la paroi tronconique (30) de la bague et une seconde paroi cylindrique (72) propre à loger la paroi cylindrique (32) de la bague.

9. Dispositif selon l'une des revendications 1 à 8, caractérisé en ce que l'embout (12) comprend une gorge intérieure propre à loger un joint d'étanchéité torique (68) propre à coopérer avec l'extrémité (18) de la tubulure (10).

10. Dispositif selon l'une des revendications 1 à 9, caractérisé en ce que le second moyen de verrouillage comprend un jonc déformable (74) propre à entourer au moins en partie l'embout (12) et comportant deux parties opposées (76) rappelées élastiquement l'une vers l'autre, et en ce que ces deux parties opposées du jonc sont propres à traverser deux fentes opposées (78) de l'embout pour venir s'engager dans une rainure annulaire (34) ménagée à la périphérie de la bague (26).

11. Dispositif selon la revendication 10, caractérisé en ce que le jonc déformable (74) est réalisé à partir d'un fil métallique et comprend une poignée (80).

12. Dispositif selon l'une des revendications 1 à 11, caractérisé en ce que l'embout (12) comprend une partie annulaire (52) pour la réception d'un conduit souple (14).

13. Dispositif selon l'une des revendications 1 à 12, caractérisé en ce que la tubulure (10) est métallique, par exemple en aluminium, tandis que la bague (26) et l'embout (12) sont en matière plastique.

14. Dispositif selon l'une des revendications 1 à 13, caractérisé en ce qu'il comprend deux bagues (26) propres à assurer le raccordement simultané de deux tubulures (10) et de deux embouts (12), lesdites bagues étant reliées entre elles par un lien souple (44) autorisant un déplacement mutuel des deux bagues.

15. Dispositif selon l'une des revendications 1 à 14, caractérisé en ce que les tubulures (10) sont des tubulures d'entrée et de sortie de fluide caloporteur d'un échangeur de chaleur.

16. Echangeur de chaleur équipé d'un dispositif de raccord rapide selon l'une des revendications 1 à 15.
